# EUROPÄISCHE PATENTSCHRIFT

(11) **EP 4 291 022 B1**
(45) Veröffentlichungstag und Bekanntmachung des Hinweises auf die Patenterteilung: **25.12.2024**
(21) Anmeldenummer: 22705896.3
(22) Anmeldetag: 14.02.2022
(51) Int. Cl.: A01K 29/00

(54) **VERFAHREN UND VORRICHTUNG ZUR NACHVERFOLGUNG VON TIEREN**
METHOD AND DEVICE FOR TRACKING ANIMALS
PROCÉDÉ ET DISPOSITIF DE SUIVI DES ANIMAUX

(30) Priorität: 12.02.2021 AT 292021
(43) Veröffentlichungstag der Anmeldung: 20.12.2023
(73) Patentinhaber: Zehentner, Markus, 5700 Zell am See (AT)
(72) Erfinder: Zehentner, Markus, 5700 Zell am See (AT)
(74) Vertreter: SONN Patentanwälte GmbH & Co KG
(86) Internationale Anmeldenummer: PCT/IB2022/051275
(87) Internationale Veröffentlichungsnummer: WO 2022/172232

(56) Entgegenhaltungen:
- WO-A2-2011/039112
- CN-A- 108 717 523
- CN-A- 108 990 831
- CN-A- 111 294 565
- CN-A- 111 685 060
- US-A1- 2015 289 478
- US-A1- 2019 037 800

## Beschreibung

Die Erfindung betrifft ein Verfahren zur Nachverfolgung von Tieren, insbesondere Rindern, sowie eine Vorrichtung zur Durchführung dieses Verfahrens.

In der tierhaltenden Landwirtschaft, insbesondere in der Milchwirtschaft, ist sowohl international als auch national ein starker Trend zum Einsatz von Technik und Elektronik zur Überwachung der Tiergesundheit sowie zur Bewältigung des Herdenmanagements erkennbar. Bei herkömmlichen Herdenmanagement-Systemen werden die Tiere meist mit einer elektronisch auslesbaren Kennung versehen, wie z.B. einem RFID-Chip, der z.B. als Ohrmarke ausgebildet ist. Ein solches System erfordert geeignete Auslesegeräte, die an bestimmten Positionen in einem Stall oder auf der Weide, wie z.B. an einer Futterstelle, angeordnet sind und die Anwesenheit derjenigen Tiere erkennen, die sich in ausreichender Nähe zum jeweiligen Auslesegerät befinden. Ein solches System bringt einen hohen Hardwareaufwand und damit verbunden hohe Investitionskosten mit sich. Darüber hinaus erlaubt ein solches System keine kontinuierliche Überwachung der Tiere, da Anwesenheitsdaten nur dann erhalten werden, wenn sich das Tier in ausreichender Nähe zum Auslesegerät befindet.

Bei Systemen zur Überwachung der Tiergesundheit müssen die Kühe mit Beschleunigungssensoren ausgestattet werden, die beispielsweise am Ohr, am Nacken oder am Hals angeordnet werden. Die von den Sensoren gewonnen Daten werden über eine Funkverbindung ausgelesen und in einem zentralen Rechner ausgewertet. Auch bei diesem System erfordert das Auslesen der Sensoren einen hohen Aufwand. Mit Hilfe des Beschleunigungssensors können die in der Brunst charakteristischen Bewegungsmuster der Kopf- und Hals-Partie der Kühe erfasst werden. Es ist bekannt, dass sich während einer Brunstperiode die Aktivität der Kühe signifikant erhöht. Außerdem ist während der Brunstperiode eine reduzierte Wiederkaudauer zu beobachten. Ein frühzeitiges Erkennen einer Brunstperiode ebenso wie das Erkennen von physiologischen und pathologischen Vorgängen wird besonders bei Milchviehbetrieben als wünschenswert angesehen.

Andere Sensorsysteme zur Erkennung eines Brunstgeschehens können einen Pansensensor umfassen, der die Vormagentemperatur misst. Der Temperaturverlauf ist durch die Wasseraufnahme beeinflusst und lässt ein zyklisches Brunstgeschehen erkennen.

Verschiedene Systeme zur Überwachung und Nachverfolgung von Tieren sind in den Schriften CN 111 294 565 A, WO 2011/039112 A2, CN 108 990 831 A, US 2019/037800 A1, CN 111 685 060 A und CN 108 717 523 B offenbart.

Die vorliegende Erfindung zielt darauf ab, ein Verfahren und eine Vorrichtung zur Nachverfolgung und Überwachung von Tieren bereitzustellen, welches einen geringen Investitionsaufwand verursacht und eine zuverlässige und kontinuierliche Erfassung der Tiere erlaubt. Insbesondere soll eine kontinuierliche örtliche Nachverfolgung wie auch eine kontinuierliche Überwachung von gesundheitsrelevanten Parametern sichergestellt werden. Die Datenerfassung sollte möglichst automatisiert und daher ohne Mitwirkung einer Person erfolgen.

Zur Lösung dieser Aufgabe sieht die Erfindung gemäß einem ersten Aspekt ein Verfahren zur Nachverfolgung von Tieren, insbesondere Rindern vor, umfassend die folgenden Schritte:
- kontinuierliche oder intermittierende digitale Bilderfassung einer Mehrzahl von Tieren, um digitale Bilddaten zu erhalten,
- Identifizieren einzelner Tiere mittels eines Algorithmus zur Merkmalsextraktion aus den Bilddaten oder mittels eines Vergleichsalgorithmus zum Vergleich der Bilddaten mit zuvor gewonnenen Bilddaten,
- Nachverfolgung der Fortbewegung der identifizierten Tiere, vorzugsweise mittels eines Kalman-Filters, um erste Bewegungsdaten zu erhalten,
- Analysieren der ersten Bewegungsdaten, um ein Fortbewegungsprofil jedes Tieres zu erstellen,
- Nachverfolgung der Bewegung einzelner Körperteile der Tiere unter Verwendung von mittels eines oder des Algorithmus zur Merkmalsextraktion erkannten Körpermerkmalen und/oder Erkennen und Nachverfolgen der Körperlage der Tiere aus den Bilddaten, um zweite Bewegungsdaten zu erhalten,
- Analysieren der zweiten Bewegungsdaten, um den Bewegungsablauf und/oder die Tätigkeit der Tiere zu ermitteln, um ein Verhaltensprofil jedes Tieres zu erstellen, wobei der Vergleichsalgorithmus zum Feststellen einer Ähnlichkeit zwischen einem aus den Bilddaten generierten Identifikationsvektor und einem zuvor generierten Identifikationsvektor ausgebildet ist, wobei der Vergleichsalgorithmus insbesondere zur Ermittlung der Kosinus-Ähnlichkeit ausgebildet ist, wobei der zuvor generierte Identifikationsvektor mittels exponentieller Glättung an den aus den Bilddaten generierten Identifikationsvektor angepasst wird oder bei einer zu geringen Ähnlichkeit zwischen dem aus den Bilddaten generierten Identifikationsvektor und dem zuvor generierten Identifikationsvektor ein neuer Identifikationsvektor hinterlegt wird.

Die Erfindung verzichtet somit auf tierseitig angeordnete Sensor- oder Identifizierungssysteme und kommt stattdessen mit einer elektronischen Bilddatenerfassung aus, welche mittels einer Kamera oder dgl. erfolgen kann. Es reicht somit aus, denjenigen örtlichen Bereich, in dem sich die nachzuverfolgenden Tiere aufhalten, wie z.B. einen Stall oder einen Freiluftbereich, mit wenigstens einer Kamera auszustatten. Die gewonnen Bilddaten werden hierbei sowohl zur Identifizierung der einzelnen Tiere als auch zur örtlichen Nachverfolgung der Tiere und zur Verhaltensanalyse herangezogen. Die Bilddaten werden kontinuierlich oder intermittierend erfasst, d.h. in regelmäßigen Abständen, sodass beispielsweise ein Video aufgenommen wird.

Zur Identifizierung einzelner Tiere können die Bilddaten zunächst vorzugsweise dahingehend ausgewertet werden, dass Bildbereiche erkannt werden, in welchen sich die einzelnen Tiere befinden. Hierzu wird beispielsweise auf ein Künstliches Neuronales Netz zurückgegriffen, welches umschließende Rechtecke (Position links, oben, rechts und unten) um die einzelnen Tiere herum liefert. Um die Qualität der weiteren Verarbeitung zu verbessern, kann dieses neuronale Netz zusätzlich einen Rotationswinkel erkennen (Position links, oben, rechts, unten und Rotation des gesamten Rechtecks), da dadurch weniger Überschneidungen entstehen.

Die Identifizierung einzelner Tiere erfolgt beispielsweise mittels eines Algorithmus zur Merkmalsextraktion aus den Bilddaten bzw. aus den Bildbereichen, in denen wie oben beschrieben ein Tier erkannt wurde. Algorithmen zur Merkmalsextraktion sind auf dem Gebiet der elektronischen Bildverarbeitung bekannt und basieren z.B. auf Segmentierungsverfahren, bei denen inhaltlich zusammenhängende Regionen eines Bildes durch Zusammenfassung benachbarter Pixel entsprechend einem bestimmten Homogenitätskriterium erzeugt werden, sodass Kantenzüge und dgl. erhalten werden. Bei von Rindern erhaltenen Bilddaten können mittels der Merkmalsextraktion zum Beispiel Merkmale der tierindividuellen Fellzeichnung detektiert werden, die in der Folge mit zuvor von den Tieren ermittelten Referenzdaten abgeglichen werden, um auf die Anwesenheit eines bestimmten Tieres im Erfassungsbereich der Kamera schließen zu können.

Alternativ kann die Identifizierung einzelner Tiere mittels eines Vergleichsalgorithmus zum Vergleich der Bilddaten mit zuvor gewonnenen, in einer Datenbank gespeicherten Bilddaten erfolgen. Hierbei wird erfindungsgemäß so vorgegangen, dass der Vergleichsalgorithmus zum Feststellen einer Ähnlichkeit zwischen einem aus den Bilddaten generierten Identifikationsvektor und einem zuvor generierten Identifikationsvektor ausgebildet ist, wobei der Vergleichsalgorithmus insbesondere zur Ermittlung der Kosinus-Ähnlichkeit ausgebildet ist. Als Ergebnis des Vergleichsalgorithmus kann eine Matrix von Übereinstimmungspunkten erhalten werden. Darauf folgt eine Zuordnung der erkannten Tiere zu bereits bekannten Tieren, beispielsweise mittels der Ungarischen Methode. Diese Zuordnung enthält bevorzugt auch den einzelnen Übereinstimmungspunkte-Wert aus der oben gebildeten Matrix. Sollte dieser unter einem Grenzwert liegen, so kann ein temporäres Tier-Individuum angelegt werden. Sollte die Zuordnung einem Tier-Individuum aus der Datenbank mit ausreichend hoher Wahrscheinlichkeit entsprechen, so können alle Daten diesem zugeordnet werden. Sollte die Zuordnung einem temporären Tier-Individuum mit ausreichend hoher Wahrscheinlichkeit zugeordnet werden, so können alle Daten diesem temporären Tier-Individuum zugeordnet werden. Wenn nun das zugeordnete temporäre Tier-Individuum durch den aktuellen Identifikationsvektor auch einem Tier-Individuum in der Datenbank zugeordnet werden kann, so können alle Daten des temporären Tier-Individuums dem in der Datenbank gespeicherten hinzugefügt und das temporäre gelöscht werden. Sollte dies über einen längeren Zeitraum nicht erfolgen, so kann das temporäre Tier-Individuum bevorzugt in die Datenbank eingetragen werden.

Hierbei werden je Tier-Individuum mehrere Identifikationsvektoren hinterlegt. Sollte sich der aktuelle Identifikationsvektor nur marginal von einem hinterlegten unterscheiden, so wird mittels exponentieller Glättung der hinterlegte Identifikationsvektor angepasst, um etwaige Veränderungen des Tieres (z.B. Wachstum) zu berücksichtigen. Andernfalls wird der aktuelle Identifikationsvektor zusätzlich hinterlegt. Damit die Anzahl der hinterlegten Vektoren nicht zu groß wird, kann die Anzahl begrenzt werden. Dazu wird beim Überschreiten eines Grenzwerts ein alter hinterlegter Vektor gelöscht. Hierzu kann aufgezeichnet werden, welcher Vektor wie oft eine Zuordnung ermöglicht hat, und es kann derjenige gelöscht werden, welcher hier den geringsten Wert aufweist.

Sobald (oder bevor) ein Tier auf eine der oben beschriebenen Arten identifiziert wurde bzw. worden ist, kann durch Vergleich von zeitlich hintereinander erfassten Bilddaten eine Bewegung des Tiers relativ zur Kamera detektiert und eine Fortbewegungspfad ermittelt werden. Hierbei können Bilddaten einer Mehrzahl von Kameras herangezogen werden, um ein Tier bei einer Bewegung vom Erfassungsbereich einer der Kameras zum Erfassungsbereich einer benachbarten Kamera nachverfolgen zu können. Wenn die Nachverfolgung der Tiere über einen bestimmten Zeitraum erfolgt, kann von jedem Tier ein Fortbewegungsprofil erhalten werden. Die Analyse des Fortbewegungsprofils erlaubt Rückschlüsse auf die motorische Aktivität und den Gesundheitszustand der einzelnen Tiere.

Die Verarbeitung der digitalen Bilddaten erlaubt es nicht nur, die Tiere örtlich nachzuverfolgen, sondern auch deren Verhalten zu analysieren. Zu diesem Zweck werden die durch die Merkmalsextraktion erkannten Körpermerkmale nicht nur zur Identifizierung und Nachverfolgung der Fortbewegung der Tiere verwendet, sondern auch für die Erkennung einzelner Körperteile der Tiere. Auf Grund der Erkennung einzelner Körperteile kann deren Bewegung oder die Änderung von deren relativer Anordnung analysiert werden, um die Körperlage, den Bewegungsablauf und/oder die Tätigkeit der Tiere zu detektieren, um dadurch ein Verhaltensprofil jedes Tieres zu erstellen.

Alternativ kann das Verhaltensprofil ohne Merkmalsextraktion erfolgen, nämlich direkt auf Basis der Bilddaten, indem die Bilddaten einer Erkennung und Nachverfolgen der Körperlage der Tiere unterzogen werden, und/oder dadurch, dass die Bilddaten einem eigenständigen künstlichen neuronalen Netzwerk zugeführt werden.

Begrifflich wird hierbei zwischen dem Bewegungsablauf und der Fortbewegung eines Tieres unterschieden. Unter der Fortbewegung wird eine Ortsveränderung des Tieres verstanden. Unter dem Bewegungsablauf wird beispielsweise die zeitliche Änderung der Körperlage verstanden, z.B. Stehen, Liegen, Aufreiten auf ein anderes Tier und dgl. Zusätzlich kann die Detektion des Bewegungsablaufs auch die Erkennung umfassen, ob das Tier gerade frisst oder säuft. Dies geschieht beispielsweise, indem eine definierte Verweildauer am Futtertisch oder Tränkebecken festgestellt wird. Diese Schätzung wird durch die Erkennung der Körperlage genauer, da die genaue Position des Schädels ein besserer Hinweis auf eine Trink- oder Fresssituation ist.

Die durch das erfindungsgemäße Verfahren erhaltenen Ergebnisse, nämlich das Bewegungsprofil und das Verhaltensprofil, können in einem dem Verfahren nachgelagerten Schritt analysiert werden, um einen Kennwert zu errechnen, der für das Tierwohl repräsentativ ist. Insbesondere können ausschließlich auf Grundlage der digitalen Bilddaten sowohl Bewegungsprofile als auch Verhaltensprofile erstellt werden, die in Kombination miteinander eine besonders detaillierte und zuverlässige Analyse des Tierwohls erlauben.

Das Fortbewegungsprofil und das Verhaltensprofil können die verschiedensten Kennwerte umfassen, wie z.B. Fresszeiten, Liegezeiten, Fortbewegungsstrecke, Fortbewegungszeiten, Fortbewegungsstrecke, Stehzeiten, Aufenthaltsorte, Futterentnahme, Fressdauer, Brunstverhalten, Abkalben, pathologisches Verhalten und/oder die Wiederkaufrate jedes Tieres. Bevorzugt werden wenigstens drei, bevorzugt wenigstens vier Kennwerte erfasst, die aus der Gruppe der oben genannten Kennwerte ausgewählt sind.

Beispielsweise kann über einen gewissen Zeitraum die durchschnittliche Geschwindigkeit der Fortbewegung des Tiers gemittelt und als Ausgangswert gespeichert werden. Anhand dieses Ausgangswerts kann auf erhöhte oder verminderte Aktivität geschlossen werden, je nachdem, ob der Ausgangswert unter- oder überschritten wird. Weiters kann ein Ausgangswert generiert werden, der dafür repräsentativ ist, wie oft das Tier die Position ändert (Verhältnis der Liegezeit zur Fortbewegungszeit), was ebenfalls in die Analyse der Aktivität miteinbezogen werden kann, indem festgestellt wird, ob Der Ausgangswert der Aktivität über- oder unterschritten wird.

Das erfindungsgemäße Verfahren erlaubt bevorzugt auch die Abkalbeerkennung auf Grund der während der Geburt verminderten Aktivität des Tieres. Kurz davor kann es zu veränderter Aktivität und verändertem Fressverhalten kommen. Während der Geburt bevorzugt ein Rind z.B. zu liegen, was mittels der Posenerkennung erkennbar ist. Weiters sollte kurz nach dem Kalben ein nicht zuordenbares Rind-Individuum feststellbar sein.

Zusätzlich ist eine Audioanalyse möglich, um etwaiges Brüllen der Kuh bei Wehen zu erkennen.

Die Berechnung eines für das Tierwohl repräsentativen Kennwerts kann beispielsweise die Ermittlung der zurückgelegten Strecke je Tag, die Ausnutzung des zur Verfügung stehenden Platzes und ggf. die Erkennung des Verdreckungsgrads umfassen, wobei der Kennwert aus den genannten Werten mathematisch errechnet wird.

Gemäß einer bevorzugten Ausführung der Erfindung werden das Fortbewegungsprofil und das Verhaltensprofil kontinuierlich oder in regelmäßigen Abständen über die Lebenszeit der Tiere erfasst. Dies ermöglicht einen vollständigen Überblick über das Tierwohl während der Lebensdauer des Tiers. Im Falle von Tieren, deren Fleisch nach der Schlachtung der Lebensmittelindustrie zugeführt werden, können diese Daten beispielsweise verwendet werden, um den Konsumenten Informationen über das Tierwohl des konkreten Tiers zu liefern, welches im Handel oder in der Gastronomie zum Verkauf oder zum Verzehr angeboten wird. Ein hoher Wert des Tierwohls ist beispielsweise gegeben, wenn das Tier artgerecht gehalten wurde und genügend Freilauf hatte und ggf. kein pathologisches Verhalten gezeigt hat.

Im Rahmen des erfindungsgemäßen Verfahrens können die ersten Bewegungsdaten bevorzugt analysiert werden, um den aktuellen Standort der Tiere zu erfassen. Weiters kann der aktuelle Standort der Tiere mit einem vordefinierten Standort einer Futterstelle abgeglichen werden, um die Fressdauer jedes Tieres zu erfassen. Die Fressdauer erlaubt Rückschlüsse auf das Tierwohl und den Gesundheitszustand des Tiers.

Bevorzugt kann so vorgegangen werden, dass die zweiten Bewegungsdaten analysiert werden, um eine stehende und eine liegende Lage der Tiere zu erfassen und Steh- und Liegezeiten zu errechnen.

Bevorzugt kann weiters vorgesehen sind, dass die zweiten Bewegungsdaten analysiert werden, um die Wiederkaurate und/oder die Wiederkaudauer jedes Tieres zu erfassen. Die Wiederkaurate und/oder die Wiederkaudauer können als Indizien für ein Brunstverhalten des Tiers herangezogen werden. Für das Erkennen und Analysieren des Wiederkauens können im Rahmen der Merkmalsextraktion das Unterkiefer und die Nasenlöcher eines Rindes erkannt und die Relativbewegung dieser drei Punkte zueinander ausgewertet werden.

Das Identifizieren von Tieren auf Grundlage der Merkmalsextraktion der Bilddaten kann durch Anwenden künstlicher Intelligenz optimiert werden. Eine bevorzugte Ausführung der Erfindung sieht in diesem Zusammenhang vor, dass das Identifizieren eines Tiers mittels des Algorithmus zur Merkmalsextraktion zwei Schritte umfasst, wobei in einem ersten Schritt aus den digitalen Bilddaten eine tierindividuelle Merkmalskarte erstellt wird und in einem zweiten Schritt die tierindividuelle Merkmalskarte einem Tier zugeordnet wird, wobei die Zuordnung folgende Schritte umfasst:
- Bereitstellen einer Mehrzahl von künstlichen neuronalen Netzwerken, wobei jedes Netzwerk in Bezug auf ein bestimmtes der Mehrzahl von Tieren individualisiert oder trainiert ist,
- Zuführen der Merkmalskarte jedem der Mehrzahl von künstlichen neuronalen Netzwerken, um jeweils einen Übereinstimmungswert zu erhalten,
- Vergleichen der von den künstlichen neuronalen Netzwerken erhaltenen Übereinstimmungswerte und Identifizieren desjenigen Tiers, dessen für dieses individualisierte künstliche neuronale Netzwerk den höchsten Übereinstimmungswert aufweist.

Gemäß einem zweiten Aspekt stellt die Erfindung eine Vorrichtung zur Nachverfolgung von Tieren, insbesondere Rindern, bereit, umfassend wenigstens eine digitale Bilderfassungseinheit und eine elektronische Auswerteeinheit, welcher die digitalen Bilddaten der wenigstens einen digitalen Bilderfassungseinheit geführt sind, wobei die Auswerteeinheit für die Durchführung der folgenden Schritte eingerichtet ist:
- Identifizieren einzelner Tiere mittels eines Algorithmus zur Merkmalsextraktion aus den Bilddaten oder mittels eines Vergleichsalgorithmus zum Vergleich der Bilddaten mit zuvor gewonnenen Bilddaten,
- Nachverfolgung der Fortbewegung der identifizierten Tiere, um erste Bewegungsdaten zu erhalten,
- Analysieren der ersten Bewegungsdaten, um ein Fortbewegungsprofil jedes Tieres zu erstellen,
- Nachverfolgung der Bewegung einzelner Körperteile der Tiere unter Verwendung von mittels eines oder des Algorithmus zur Merkmalsextraktion erkannten Körpermerkmalen und/oder Erkennen und Nachverfolgen der Körperlage der Tiere aus den Bilddaten, um zweite Bewegungsdaten zu erhalten,
- Analysieren der zweiten Bewegungsdaten, um den Bewegungsablauf und/oder die Tätigkeit der Tiere zu ermitteln, um ein Verhaltensprofil jedes Tieres zu erstellen.

Eine bevorzugte Ausführung sieht vor, dass die elektronische Auswerteeinheit eingerichtet ist, um die ersten Bewegungsdaten zu analysieren und den aktuellen Standort der Tiere zu erfassen.

Bevorzugt ist die elektronische Auswerteeinheit eingerichtet, um den aktuellen Standort der Tiere mit einem vordefinierten Standort einer Futterstelle abzugleichen, um die Fressdauer jedes Tieres zu erfassen.

In vorteilhafter Weise ist die elektronische Auswerteeinheit eingerichtet, um die zweiten Bewegungsdaten zu analysieren, um eine stehende und eine liegende Lage der Tiere zu erfassen und Steh- und Liegezeiten zu errechnen.

Gemäß einer bevorzugen Ausführungsform ist die elektronische Auswerteeinheit eingerichtet, um die zweiten Bewegungsdaten zu analysieren, um die Wiederkaurate jedes Tieres zu erfassen.

Insbesondere kann vorgesehen sein, dass das Fortbewegungsprofil und das Verhaltensprofil wenigstens drei, bevorzugt wenigstens vier Kennwerte umfassen, die ausgewählt sind aus der Gruppe bestehend aus Fresszeiten, Liegezeiten, Fortbewegungszeiten, Fortbewegungsstrecke, Stehzeiten, Aufenthaltsorte, Futterentnahme, Fressdauer, Brunstverhalten, Abkalben, pathologisches Verhalten und/oder die Wiederkaufrate jedes Tieres.

Bevorzugt ist die elektronische Auswerteeinheit eingerichtet, um das Tierwohl jedes Tieres aus dem Fortbewegungsprofil und dem Verhaltensprofil zu ermitteln, vorzugsweise in Form einer Kennzahl zu errechnen.

Besonders bevorzugt ist die elektronische Auswerteeinheit eingerichtet, um das Identifizieren eines Tiers mittels des Algorithmus zur Merkmalsextraktion in zwei Schritten vorzunehmen, wobei in einem ersten Schritt aus den digitalen Bilddaten eine tierindividuelle Merkmalskarte erstellt wird und in einem zweiten Schritt die tierindividuelle Merkmalskarte einem Tier zugeordnet wird, wobei die Zuordnung folgende Schritte umfasst:
- Bereitstellen einer Mehrzahl von künstlichen neuronalen Netzwerken, wobei jedes Netzwerk in Bezug auf ein bestimmtes der Mehrzahl von Tieren individualisiert ist,
- Zuführen der Merkmalskarte jedem der Mehrzahl von künstlichen neuronalen Netzwerken, um jeweils einen Übereinstimmungswert zu erhalten,
- Vergleichen der von den künstlichen neuronalen Netzwerken erhaltenen Übereinstimmungswerte und Identifizieren desjenigen Tiers, dessen für dieses individualisierte künstliche neuronale Netzwerk den höchsten Übereinstimmungswert aufweist.

Die Erfindung wird nachfolgend anhand eines nicht einschränkenden Ausführungsbeispiels näher erläutert.

Das dargestellte Beispiel betrifft ein System und ein Verfahren zu Erkennung und zur Analyse von Rindern, welches folgende Verarbeitungsschritte umfasst:
a) Einlesen der Bilddaten
b) Instance Segmentation
c) Ausschneiden jedes einzelnen Rindes
d) Keypointerkennung
e) Person Reidentification
f) Fellhelligkeitsbestimmung nahe gewisser Keypoints
g) Ohrmarkenerkennung
h) Positionserkennung
i) Zeitliche Analyse der Position
j) Rindidentifikation
k) Auswertung
l) Speichern der gewonnenen Daten

Diese Analyseschritte setzen teilweise einander voraus, können aber auch zum Teil parallel abgearbeitet werden.

### a) Einlesen der Bilddaten

Das Einlesen der Bilddaten kann beispielsweise in Form von Einzelbildern, in Form von aufgezeichneten Videos oder von Live-Daten von einer Kamera erfolgen.

### b) Instance Segmentation

Im Rahmen der Bildverarbeitung erfolgt ein Segmentieren der Bilder, als Vorstufe zur Merkmalsextraktion. In den eingelesenen Bilddaten sollen diejenigen Bildbereiche identifiziert werden, in denen einzelne Rinder abgebildet sind, was durch ein DeepLearning-Instance-Segmentation-Model vorgenommen werden kann. Denkbar ist die Verwendung eines Mask-RCNN-Modells. Dieses Model sucht sich zuerst interessante Regionen, sogenannte "Regions of Interest (ROIs)" und analysiert diese ROIs danach genauer. Die Ausgabe ist eine eigene Bildmaske für jedes erkannte Rind.

Bestehende Systeme können auf die spezifische Aufgabe des Erkennens von Rindern trainiert werden. Dafür werden Beispieldaten, bestehend aus Eingabe- und gewünschten Ausgabedaten, herangezogen.

### c) Ausschneiden jedes einzelnen Rindes

Mit den durch die Instance Segmentation erhaltenen Bildmasken werden dann die einzelnen Rinder in separate Bilder ausgeschnitten. Weiters wird der eventuell störende Hintergrund durch eine höchstwahrscheinlich nicht im Bildmaterial anzutreffende Farbe ersetzt werden (z.B. Fuchsia) .

### d) Keypointerkennung

Diese Einzelbilder der Rinder werden danach durch ein DeepLearning-Image-Classification-Model analysiert. Ein Image-Classification-Model erkennt so wie ein Instance-Segmentation-Model verschiedene Bereiche des Bildes. Allerdings werden dabei keine Bildmasken erzeugt, sondern Bounding-Boxes, welche mittels eines Rechteckes auf dessen Inhalt hinweisen. Damit können interessante Punkte des Rinderkörpers erkannt werden wie z.B. Maul, Stirn, Schulter, Knie und Schwanzansatz. Als Model kann beispielsweise die Software "YOLOv3" eingesetzt werden, da sie sehr hohe Verarbeitungsgeschwindigkeit bei ausreichend guter Erkennungsrate aufweist. YOLOv3 erreicht diese Geschwindigkeit dadurch, dass es die Bilddaten nur einmal liest. Auch hier sollten Beispieldaten für das Training generiert werden.

### e) Person Reidentification

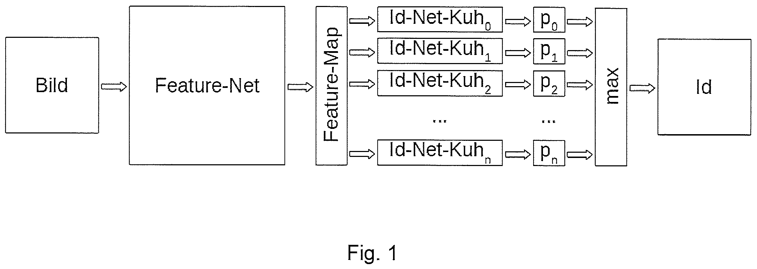

Die Re-Identifikation ist in mehrere Schritte aufgeteilt, wie dies in Fig. 1 dargestellt ist.

Im ersten Schritt werden Merkmale aus den Bilddaten extrahiert. Das Bild des Rindes wird von einem zur Erkennung von Merkmalen trainierten neuronalen Netzwerks ("Feature-Net") vorverarbeitet. Das Resultat ist eine Merkmalskarte ("Feature-Map"), welche das Rind beschreibt.

Im zweiten Schritt erfolgt die Identifizierung, indem die erhaltene Merkmalskarte nun durch Rind-individuelle Identifizierungsnetzwerke (Id-Net-Kuh_{0,1,2... n}) weiterverarbeitet wird. Diese Rind-individuellen Identifizierungsnetzwerke haben die Wahrscheinlichkeit, dass es sich um das Rind, auf welches das Netz trainiert ist, als Ergebnis (p_{1,2,..n}). Im laufenden Training werden diese Netze angepasst und optimiert. Sollte ein neues Rind in der Herde sein, so wird für dieses ein eigenes Netz erstellt.

Im dritten Schritt erfolgt die Auswertung: wenn das Identifizierungsnetzwerk mit der höchsten Wahrscheinlichkeit über einem gewissen Schwellwert liegt, so kann dadurch auf das Rind-Individuum zurückgeschlossen werden. Sollte der Schwellwert nicht überschritten werden, so bedeutet dies, dass das Individuum nicht sicher identifiziert werden konnte und es erfolgt stattdessen eine Identifizierung mittels des Objekt-Trackings bzw. wenn auch dieses keine Identifizierung zulässt, kann nach einer gewissen Zeit von einem neuen Rind ausgegangen werden.

Um die Re-Identifikation laufend weiter zu trainieren, können mittels der vom Objekt-Tracking gelieferten freigestellten Bilder mittels des Feature-Netzwerkes dazugehörige Merkmalskarten generiert werden. Mit diesen Merkmalskarten können nun die Identifizierungsnetzwerke trainiert werden. Bei einem neuen Rind wird ein neues Identifizierungsnetzwerk für dieses angelegt.

### f) Fellhelligkeitsbestimmung nahe gewisser Keypoints

Als weiteres "schwaches" Erkennungsmerkmal können Helligkeitswerte an gewissen Keypoints, wie etwa Stirn, Knie, Schwanzansatz gemessen und in Kurzform codiert werden. Die Idee dahinter ist, dass man anhand hinterlegter Helligkeitswerte zusätzlich eine grobe, aber ressourcenschonende, Identifikation durchführen kann. Es sollen deswegen nur Helligkeitswerte und keine Farbwerte verwendet werden, damit dieser Ansatz auch mit eventuellen Nachtsicht-Kameras, welche nur Graustufenbilder liefern, funktionieren kann.

### g) Ohrmarkenerkennung

Sollte bei der Keypointerkennung eine Ohrmarke erkannt werden, so wird mittels üblicher OCR-Verfahren versucht diese zu lesen und für die Rindidentifikation zu verwenden.

### h) Positionserkennung

Mittels vorher eingemessener Referenzpunkte können mehrere Positionsdaten ermittelt werden. Einerseits ein grober Mittelpunkt des Rindes im Raum. Andererseits soll mittels eines mathematischen Modelles oder einem DeepLearning-Model auch die Positionen der Keypoints im Raum ermittelt werden. Diese Positionsdaten können dann verwendet werden, um ein vereinfachtes Rindskelett abzubilden und daraus Bewegungsverhaltens-Daten zu erhalten.

### i) Zeitliche Analyse der Position

Der errechnete Mittelpunkt des Rindes soll für eine zeitlich Analyse der Position verwendet werden. Hierbei ist gemeint, einen möglichen Bewegungsbereich jedes einzelnen Rindes zu berechnen, um mithilfe dessen die Rinder auch ohne geglückte Identifikation verfolgen zu können. Wichtig ist dies, um kurzzeitiges Nicht-Identifizieren zu überbrücken. Auch wird es für die Erkennung unbekannter Individuen benötigt.

### j) Rindidentifikation

Mittels der durch Person-Reidentification, Fellhelligkeitsbestimmung und Ohrmarkenerkennung gewonnenen Daten wird auf das Rind-Individuum geschlossen. Sollte dies nicht gelingen, kann dies entweder daran liegen, dass diese Schritte fehlgeschlagen sind oder sich ein neues Rind in der Herde befindet. Bei ersterem soll mittels der zeitlichen Positionsanalyse und einer vorher, oder auch nachher, geglückten Identifikation die Daten dem Rind zuzuordnen. Sollte dies allerdings über einen gewissen Zeitraum nicht glücken, so kann von einem neuen Rind ausgegangen werden und mittels der erkannten Keypoints werden Bilder für das automatische Training eines neuen Person-Reidentification-Auswerte-Models für das neue Individuum gesammelt.

### Speichern der gewonnenen Daten

Alle in den vorherig erläuterten Schritten gewonnenen Daten können unabhängig von ihrer Qualität in einer Datenbank gespeichert werden.

### k) Auswertung

Die gespeicherten Roh-Daten können nun für weitere Auswertungen herangezogen werden. Diese Auswertungen erfolgen vorzugsweise periodisch und werden auch in der Datenbank werden.

Zu den möglichen Auswertungen könnten zählen:
- Brunsterkennung anhand erhöhter Aktivität
- Brunsterkennung über das Verhalten
- Lahmheitserkennung mittels des vereinfachten Skelettes
- Verhaltensveränderung mittels Anomalieerkennung

Brunsterkennung anhand erhöhter Aktivität Weibliche Rinder weisen eine erhöhte Aktivität in der Brunst auf. Diese kann relativ einfach durch die Mittelpunktposition im Raum und deren Veränderungsrate erkannt werden.

### Brunsterkennung über das Verhalten:

In der Anfangsphase der Brunst reiten weibliche Rinder auf anderen auf. Dies kann durch das vereinfachte Skelett erkannt werden. In der späteren Duldungsphase der Brunst weichen weibliche Rinder dem Aufreiten nicht mehr aus. Dies kann über die vereinfachten Skelette der beiden beteiligten Rinder erkannt werden.

### Lahmheitserkennung mittels des vereinfachten Skelettes:

Bei Lahmheit weisen Rinder in der Regel einen nach oben gekrümmten Rücken auf. Auch dies kann über das vereinfachte Skelett erkannt werden.

### Verhaltensveränderung mittels Anomalieerkennung:

Eine Verhaltensveränderung kann mittels eines laufend individuell mittrainierten DeepLearning-Models umgesetzt werden. Hierzu wird ein Modell für jedes Rind laufend mittrainiert. Dieses Modell soll mögliches Verhalten des Rindes voraussagen. Bei einer markanten Abweichung zur Realität könnte dies auf eine Verhaltensveränderung hinweisen.

### Anzeige der Daten

Es kann folgende Möglichkeiten geben, um die durch die Analyse gewonnenen Daten maschinell oder durch den Endanwender abzurufen:
- Web-API
- Web-Oberfläche
- App für mobile Endgeräte • Alarmierung

### Web-API:

Kern des Daten-Abrufs kann die Web-API darstellen. Über diese können alle relevanten Daten aus der Datenbank abrufbar sein. Auch könnte diese Schnittstelle für Fremdsysteme zugänglich gemacht werden, um so bestehende Herden-Management-Systeme mit Daten zu beliefern.

### Web-Oberfläche:

Die Web-Oberfläche kann die von der Web-API zur Verfügung gestellten Daten in für den Endanwender verwertbarer Form darstellen. Sie kann sich an der Oberfläche bereits etablierter Herden-Managementsystemen orientieren. Auch wäre die Umsetzung eines einfachen Herden-Management-Systems hier denkbar.

### App für mobile Endgeräte:

Auch kann es eine App für mobile Endgeräte geben, welche vom Inhalt her die Web-Oberfläche widerspiegeln soll. Die Umsetzung als Progressive-Web-App wäre denkbar.

### Alarmierung:

Es kann eine Alarmierung geben, welche auf gewisse Analyseergebnisse, wie etwa Brunst, hinweisen soll. Diese Alarmierung kann via App-Push-Benachrichtigung oder SMS-Benachrichtigung umgesetzt werden.

## Patentansprüche

1. Verfahren zur Nachverfolgung von Tieren, insbesondere Rindern, umfassend die folgenden Schritte:
- kontinuierliche oder intermittierende digitale Bilderfassung einer Mehrzahl von Tieren, um digitale Bilddaten zu erhalten,
- Identifizieren einzelner Tiere mittels eines Vergleichsalgorithmus zum Vergleich der Bilddaten mit zuvor gewonnenen Bilddaten,
- Nachverfolgung der Fortbewegung der identifizierten Tiere, vorzugsweise mittels eines Kalman-Filters, um erste Bewegungsdaten zu erhalten,
- Analysieren der ersten Bewegungsdaten, um ein Fortbewegungsprofil jedes Tieres zu erstellen,
- Nachverfolgung der Bewegung einzelner Körperteile der Tiere unter Verwendung von mittels eines oder des Algorithmus zur Merkmalsextraktion erkannten Körpermerkmalen und/oder Erkennen und Nachverfolgen der Körperlage der Tiere aus den Bilddaten, um zweite Bewegungsdaten zu erhalten,
- Analysieren der zweiten Bewegungsdaten, um den Bewegungsablauf und/oder die Tätigkeit der Tiere zu ermitteln, um ein Verhaltensprofil jedes Tieres zu erstellen, **dadurch gekennzeichnet, dass** der Vergleichsalgorithmus zum Feststellen einer Ähnlichkeit zwischen einem aus den Bilddaten generierten Identifikationsvektor und einem zuvor generierten Identifikationsvektor ausgebildet ist, wobei der Vergleichsalgorithmus insbesondere zur Ermittlung der Kosinus-Ähnlichkeit ausgebildet ist, wobei der zuvor generierte Identifikationsvektor mittels exponentieller Glättung an den aus den Bilddaten generierten Identifikationsvektor angepasst wird oder bei einer zu geringen Ähnlichkeit zwischen dem aus den Bilddaten generierten Identifikationsvektor und dem zuvor generierten Identifikationsvektor ein neuer Identifikationsvektor hinterlegt wird.

2. Verfahren nach Anspruch 1, **dadurch gekennzeichnet, dass** das Fortbewegungsprofil und das Verhaltensprofil kontinuierlich oder in regelmäßigen Abständen über die Lebenszeit der Tiere erfasst werden.

3. Verfahren nach Anspruch 1 oder 2, **dadurch gekennzeichnet, dass** die ersten Bewegungsdaten analysiert werden, um den aktuellen Standort der Tiere zu erfassen.

4. Verfahren nach Anspruch 1, 2 oder 3, **dadurch gekennzeichnet, dass** der aktuelle Standort der Tiere mit einem vordefinierten Standort einer Futterstelle abgeglichen wird, um die Fressdauer jedes Tieres zu erfassen.

5. Verfahren nach einem der Ansprüche 1 bis 4, **dadurch gekennzeichnet, dass** die zweiten Bewegungsdaten analysiert werden, um eine stehende und eine liegende Lage der Tiere zu erfassen und Steh- und Liegezeiten zu errechnen.

6. Verfahren nach einem der Ansprüche 1 bis 5, **dadurch gekennzeichnet, dass** die zweiten Bewegungsdaten analysiert werden, um die Wiederkaurate jedes Tieres zu erfassen.

7. Verfahren nach einem der Ansprüche 1 bis 6, **dadurch gekennzeichnet, dass** das Fortbewegungsprofil und das Verhaltensprofil wenigstens drei, bevorzugt wenigstens vier Kennwerte umfassen, die ausgewählt sind aus der Gruppe bestehend aus Fresszeiten, Liegezeiten, Fortbewegungszeiten, Fortbewegungsstrecke, Stehzeiten, Aufenthaltsorte, Futterentnahme, Fressdauer, Brunstverhalten, Abkalben, pathologisches Verhalten und/oder die Wiederkaufrate jedes Tieres.

8. Verfahren nach einem der Ansprüche 1 bis 7, **dadurch gekennzeichnet, dass** das Tierwohl jedes Tieres aus dem Fortbewegungsprofil und dem Verhaltensprofil ermittelt wird, wobei das Tierwohl bevorzugt in Form einer Kennzahl errechnet wird.

9. Verfahren nach einem der Ansprüche 1 bis 8, **dadurch gekennzeichnet, dass** das Identifizieren eines Tiers mittels des Algorithmus zur Merkmalsextraktion zwei Schritte umfasst, wobei in einem ersten Schritt aus den digitalen Bilddaten eine tierindividuelle Merkmalskarte erstellt wird und in einem zweiten Schritt die tierindividuelle Merkmalskarte einem Tier zugeordnet wird, wobei die Zuordnung folgende Schritte umfasst:
- Bereitstellen einer Mehrzahl von künstlichen neuronalen Netzwerken, wobei jedes Netzwerk in Bezug auf ein bestimmtes der Mehrzahl von Tieren individualisiert oder trainiert ist,
- Zuführen der Merkmalskarte jedem der Mehrzahl von künstlichen neuronalen Netzwerken, um jeweils einen Übereinstimmungswert zu erhalten,
- Vergleichen der von den künstlichen neuronalen Netzwerken erhaltenen Übereinstimmungswerte und Identifizieren desjenigen Tiers, dessen für dieses individualisierte künstliche neuronale Netzwerk den höchsten Übereinstimmungswert aufweist.

## Claims

1. Method for tracking animals, in particular cattle, comprising the following steps:
- continuous or intermittent digital image acquisition of a plurality of animals to obtain digital image data,
- identifying individual animals using a comparison algorithm to compare the image data with previously obtained image data,
- tracking the movement of the identified animals, preferably using a Kalman filter to obtain first movement data,
- analysing the first movement data to create a movement profile of each animal,
- tracking the movement of individual body parts of the animals using body features detected by one or the feature extraction algorithm and/or detecting and tracking the body position of the animals from the image data, to obtain second movement data,
- analysing the second motion data in order to determine the sequence of movements and/or the activity of the animals in order to create a behavioural profile of each animal, **characterised in that** the comparison algorithm is designed to determine a similarity between an identification vector generated from the image data and a previously generated identification vector, wherein the comparison algorithm is designed in particular to determine the cosine similarity, wherein the previously generated identification vector is adapted to the identification vector generated from the image data by means of exponential smoothing or, if the similarity between the identification vector generated from the image data and the previously generated identification vector is too low, a new identification vector is stored.

2. Method according to claim 1, **characterised in that** the movement profile and the behaviour profile are recorded continuously or at regular intervals over the lifetime of the animals.

3. Method according to claim 1 or 2, **characterised in that** the first movement data is analysed to detect the current location of the animals.

4. Method according to claim 1, 2 or 3, **characterised in that** the current location of the animals is compared with a predefined location of a feeding station in order to record the feeding time of each animal.

5. Method according to any one of claims 1 to 4, **characterised in that** the second movement data are analysed in order to detect a standing and a lying position of the animals and to calculate standing and lying times.

6. Method according to any one of claims 1 to 5, **characterised in that** the second movement data is analysed to detect the rate of rumination of each animal.

7. Method according to any one of claims 1 to 6, **characterised in that** the movement profile and the behaviour profile comprise at least three, preferably at least four characteristic values which are selected from the group consisting of feeding times, lying times, movement times, movement distance, standing times, whereabouts, feed removal, feeding duration, rutting behaviour, calving, pathological behaviour and/or the ruminating rate of each animal.

8. Method according to any one of claims 1 to 7, **characterised in that** the animal welfare of each animal is determined from the movement profile and the behaviour profile, the animal welfare preferably being calculated in the form of a key figure.

9. Method according to any one of claims 1 to 8, **characterised in that** the identification of an animal by means of the algorithm for feature extraction comprises two steps, wherein in a first step an animal-individual feature map is created from the digital image data and in a second step the animal-individual feature map is assigned to an animal, wherein the assignment comprises the following steps:
- Providing a plurality of artificial neural networks, wherein each network is individualised or trained with respect to a particular one of the plurality of animals,
- Feeding the feature map to each of the plurality of artificial neural networks to obtain a match value for each,
- Comparing the matching values obtained from the artificial neural networks and identifying the animal having the highest matching value for the artificial neural network that is individualised to it.

## Revendications

1. Procédé de suivi d'animaux, en particulier de bétail, comprenant les étapes suivantes :
- la capture d'image numérique continue ou intermittente d'une pluralité d'animaux pour obtenir des données d'image numériques,
- l'identification d'animaux individuels au moyen d'un algorithme de comparaison pour la comparaison des données d'image avec des données d'image précédemment acquises,
- le suivi du déplacement des animaux identifiés, de préférence au moyen d'un filtre de Kalman, pour obtenir de premières données de mouvement,
- l'analyse des premières données de mouvement pour créer un profil de déplacement de chaque animal,
- le suivi du mouvement de parties de corps individuelles des animaux en utilisant des caractéristiques corporelles détectées au moyen d'un ou de l'algorithme d'extraction de caractéristiques et/ou la détection et le suivi de la position de corps des animaux à partir des données d'image pour obtenir des deuxièmes données de mouvement,
- l'analyse des deuxièmes données de mouvement pour établir le déroulement de mouvement et/ou l'activité des animaux afin de créer un profil de comportement pour chaque animal, **caractérisé en ce que** l'algorithme de comparaison est conçu pour le constat d'une similarité entre un vecteur d'identification produit à partir des données d'image et un vecteur d'identification produit précédemment, dans lequel l'algorithme de comparaison est conçu en particulier pour l'établissement de la similarité cosinus, dans lequel le vecteur d'identification produit précédemment est ajusté au moyen d'un lissage exponentiel au vecteur d'identification produit à partir des données d'image ou, en cas de similarité trop faible entre le vecteur d'identification produit à partir des données d'image et le vecteur d'identification produit précédemment, un nouveau vecteur d'identification est enregistré.

2. Procédé selon la revendication 1, **caractérisé en ce que** le profil de déplacement et le profil de comportement sont capturés en continu ou à intervalles réguliers pendant la durée de vie des animaux.

3. Procédé selon la revendication 1 ou 2, **caractérisé en ce que** les premières données de mouvement sont analysées pour capturer l'emplacement en cours des animaux.

4. Procédé selon la revendication 1, 2 ou 3, **caractérisé en ce que** l'emplacement en cours des animaux est recoupé avec un emplacement prédéfini d'une mangeoire pour capturer la durée de prise de nourriture de chaque animal.

5. Procédé selon l'une des revendications 1 à 4, **caractérisé en ce que** les deuxièmes données de mouvement sont analysées pour capturer une position debout et une position couchée des animaux et calculer des temps en stations debout et couchée.

6. Procédé selon l'une des revendications 1 à 5, **caractérisé en ce que** les deuxièmes données de mouvement sont analysées pour capturer le taux de rumination de chaque animal.

7. Procédé selon l'une des revendications 1 à 6, **caractérisé en ce que** le profil de déplacement et le profil de comportement comprennent au moins trois, de préférence au moins quatre paramètres caractéristiques qui sont sélectionnés dans le groupe composé de temps de prise de nourriture, de temps en station couchée, de temps de déplacement, d'une distance de déplacement, de temps en station debout, de lieux de stationnement, d'un prélèvement de nourriture, d'une durée de prise de nourriture, d'un comportement pendant le rut, d'un vêlage, d'un comportement pathologique et/ou du taux de rumination de chaque animal.

8. Procédé selon l'une des revendications 1 à 7, **caractérisé en ce que** le bien-être animal de chaque animal est établi à partir du profil de déplacement et du profil de comportement, dans lequel le bien-être animal est de préférence calculé sous la forme d'un nombre caractéristique.

9. Procédé selon l'une des revendications 1 à 8, **caractérisé en ce que** l'identification d'un animal au moyen de l'algorithme d'extraction de caractéristiques comprend deux étapes, dans lequel dans une première étape une carte de caractéristiques propres à un animal est créée à partir des données d'image numériques et dans une deuxième étape la carte de caractéristiques propre à un animal est attribuée à un animal, dans lequel l'attribution comprend les étapes suivantes :
- fourniture d'une pluralité de réseaux neuronaux artificiels, dans lequel chaque réseau est individualisé ou entraîné par rapport à un animal déterminé parmi la pluralité d'animaux,
- amenée de la carte de caractéristiques à chacun de la pluralité de réseaux neuronaux artificiels pour respectivement obtenir une valeur de concordance,
- comparaison des valeurs de concordance obtenues par les réseaux neuronaux artificiels et identification de l'animal qui présente la valeur de concordance la plus élevée pour ce réseau neuronal artificiel individualisé.
